# EUROPEAN PATENT SPECIFICATION

(11) **EP 3 576 056 B1**
(45) Date of publication and mention of the grant of the patent: **27.09.2023**
(21) Application number: 19175197.3
(22) Date of filing: 17.05.2019
(51) Int. Cl.: G07F 13/10, B65G 59/10

(54) **DEVICE FOR DISPENSING CUPS AND THE LIKE**
VORRICHTUNG ZUR AUSGABE VON BECHERN UND DERGLEICHEN
DISPOSITIF POUR LA DISTRIBUTION DE GOBELETS ET SIMILAIRES

(30) Priority: 01.06.2018 IT 201800005929
(43) Date of publication of application: 04.12.2019
(73) Proprietor: Bianchi Industry S.p.a., Frazione Zingonia (IT)
(72) Inventor: ZAVATTI, Marco, 24040 CASTEL ROZZONE BG (IT)
(74) Representative: Modiano, Micaela Nadia

(56) References cited:
- EP-A1- 1 575 006
- GB-A- 2 291 867
- GB-A- 2 402 386
- US-A- 5 518 149

## Description

The present invention relates to a device for dispensing cups and the like, in particular for dispensing single-use cups in automatic beverage vending machines, which is useful and practical particularly, but not exclusively, in the field of catering and of automatic vending machines.

The devices for dispensing cups to which the invention relates are the devices for dispensing containers that are adapted to contain beverages and foods for immediate consumption, such as in fact cups, beakers, glasses, bowls etc.

For brevity, hereinafter in the description and in the accompanying claims, the term "cup" will be used to refer, completely generally and not in a limiting manner, to any container that is adapted to contain beverages and/or foods for immediate consumption.

Devices are known for dispensing cups which, upon receiving a command, dispense a cup, usually by making it fall, by gravity, from a stack above.

Nowadays devices for dispensing cups have applications mainly in automatic vending machines of foods and beverages. These vending machines, in fact, are generally provided with one or more devices for dispensing cups which perform the task of dispensing the cup into which the beverage or the food product selected by the user will be dispensed.

Less frequently, devices for dispensing cups also have applications outside of automatic vending machines.

Conventional devices for dispensing cups comprise a container for the cups in which the cups are generally stacked in a column positioned above a dispensing outlet which, mechanically, controls the release of the cups.

In more detail, the dispensing outlet is usually provided with movable release elements that are actuated by an actuator, such as for example forks or cylindrical elements positioned so as to define a circular opening between them.

In practice the release elements, by way of a suitable movement, act mechanically on the rim of the closest cup, causing it to fall, and simultaneously prevent the fall of the other cups above it.

Usually, devices for dispensing cups also comprise a conveyor tube which is connected to the dispensing outlet, under it, in order to direct the fall of the cup.

Below the conveyor tube there is often a fork which receives the dispensed cup, supporting it.

In general, for a correct operation of a device for dispensing cups it is necessary that the diameter of the circular opening defined between the release elements is perfectly calibrated for the diameter of the cup to be dispensed.

In fact, a diameter that is too big would result in the uncontrolled fall of the cups, while a diameter that is too small would prevent a correct dispensing and would cause jams.

Accordingly, the problem arises that conventional devices for dispensing cups can operate with only a single size of cups.

In order to overcome this problem, devices for dispensing cups have been developed that can be reconfigured by varying the diameter of the opening of the dispensing outlet.

Although very useful, these conventional devices for dispensing cups have some drawbacks.

Firstly, the variations in diameter that it is possible to obtain is generally limited to a few millimeters and therefore the variety of measurements of cups that can be dispensed is very restricted.

Secondly, in conventional devices for dispensing cups, the procedure for varying the aforementioned diameter is, in practice, lengthy and complex to carry out, requiring invasive operations such as disassembly of the shelves and supports, or extraction of the entire device from the vending machine in which it is installed.

Thirdly, in conventional devices for dispensing cups, the variation of the diameter of the dispensing outlet is imprecise and, in order to be successfully completed, it requires a high level of ability and experience on the part of the technician who carries out the operation.

US 5518149, EP 1575006 and GB 2402386 disclose devices for dispensing cups.

The aim of the present invention is to solve the above mentioned technical problem and overcome the drawbacks and limitations of the known art by devising a device for dispensing cups and the like that can be used to dispense different cups that have different diameters.

Within this aim, an object of the present invention is to provide a device for dispensing cups that can be reconfigured to dispense cups with a different diameter more precisely than in the known art.

Another object of the invention is to provide a device for dispensing cups that can be reconfigured to dispense cups with a different diameter more rapidly, simply and economically than in the known art.

Another object of the invention is to provide a device for dispensing cups that can be reconfigured to dispense a wider variety of cups than in the known art.

Another object of the invention is to provide a device for dispensing cups that is more reliable and less subject to jams when compared to the known art.

Another object of the invention is to provide a device for dispensing cups that is easy to implement and economically competitive when compared to the known art.

This aim and these and other objects which will become better apparent hereinafter are achieved by a device for dispensing cups and the like, as defined in claim 1.

Further characteristics and advantages of the invention will become better apparent from the detailed description of a preferred, but not exclusive, embodiment of a device for dispensing cups, which is illustrated for the purposes of non-limiting example with the aid of the accompanying drawings wherein:
Figure 1 is a perspective view of a possible embodiment of a device for dispensing cups, according to the invention;

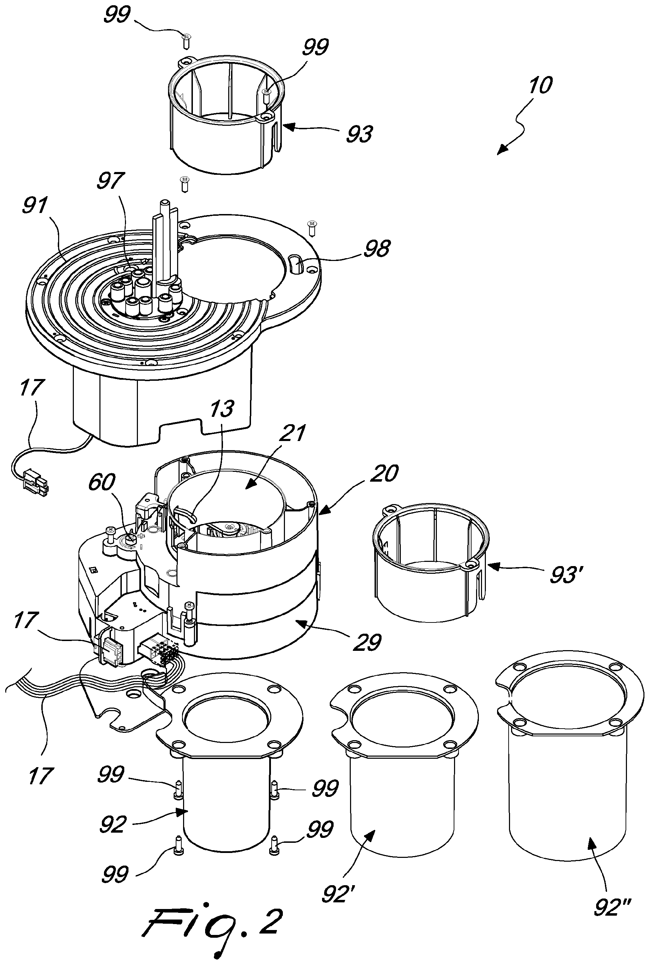

Figure 2 is an exploded view of the device for dispensing cups in Figure 1;

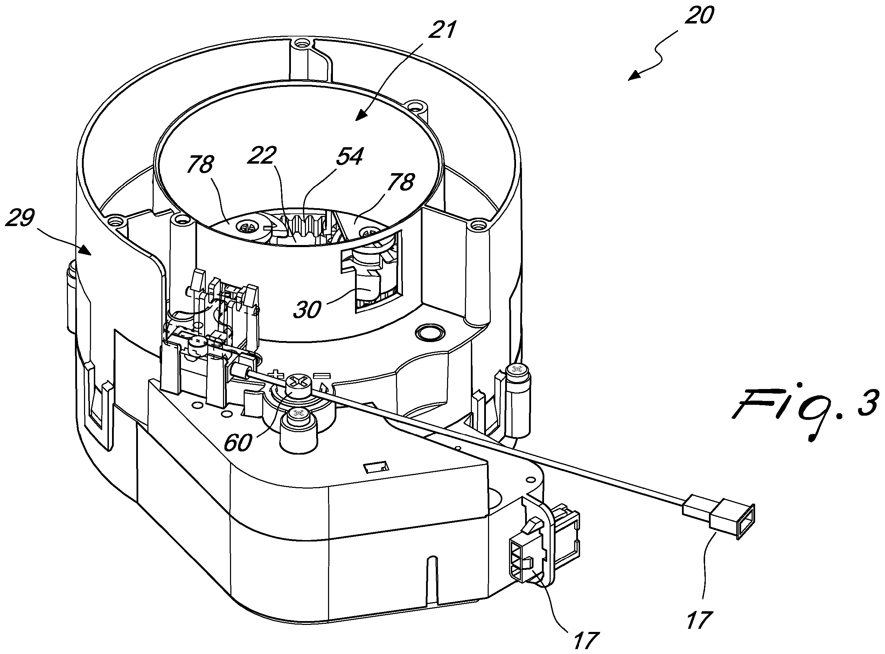

Figure 3 is a perspective view of the release device comprised in the dispensing device in Figure 1;
Figure 4 is an exploded view of the release device in Figure 3;
Figure 5 is a perspective view of a detail relating to a release element;
Figure 6 is a plan view from above of the release device in Figure 3;
Figure 7 is a cross-sectional view taking along the line IV-IV of the release device in Figure 4;
Figure 8 is a perspective view of part of the release device in Figure 3.

With reference to the figures, the device for dispensing cups and the like, generally designated by the reference numeral 10, comprises a release device 20, above which one or more cups to be dispensed can be placed, and provided with a dispensing outlet 21 with a vertical axis Y inside which the dispensed cups pass.

The release device 20 is in practice the part of the device for dispensing cups 10 that actively causes the uncoupling and the consequent fall of the cups above it.

In the example shown, the release device 20 comprises a shell 29, in which various elements are accommodated which will be described below (such as for example an actuator 40, kinematic transmission means 51, 52, 53, 54, release elements 30, data connection means 17, etc.).

The shell 29 is preferably constituted by modular sectors and comprises a substantially cylindrical portion, at the center of which is defined the dispensing outlet 21 which, in the example shown, is shaped like a tunnel with a circular cross-section.

Conveniently, the release device 20 can be configured to be installed in a machine for distributing beverages, such as for example an automatic vending machine.

Inside the dispensing outlet 21, arranged perimetrically (i.e. along the internal wall of the dispensing outlet 21) there is a plurality of release elements 30 which between them define a substantially circular passage opening 22 with a diameter d that is dimensioned as a function of the cups to be dispensed.

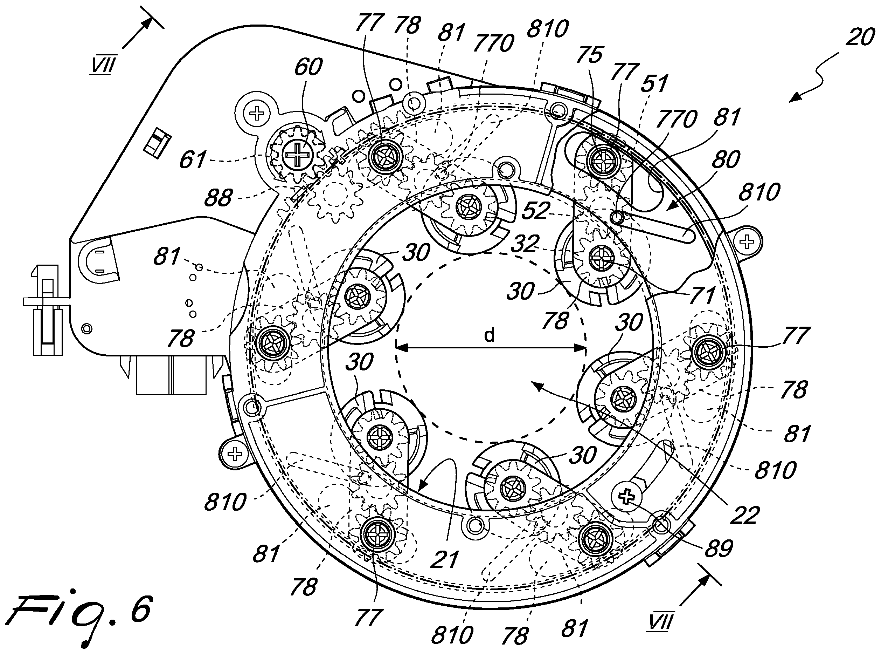

In other words, the release elements 30 are arranged substantially along a circumference that lies on an ideal horizontal plane, and between them a passage opening 22 is defined which, to simplify the explanation, can be approximated as having a cross-section equal to the maximum ideal circle that can be inscribed in such opening 22 (as drawn in Figure 6 in which the diameter of the circle, which will be considered hereinafter as the diameter of the passage opening 22, is indicated with the letter d), even though in reality the rim of the passage opening 22 can effectively be irregular and discontinuous, since the release elements 30 are mutually spaced apart.

The release elements 30 are configured to cause the fall of a single cup to be dispensed through the passage opening 22 following a release movement thereof; this means that, by moving, the release elements 30 act mechanically on the rim of the closest cup, causing its fall and, at the same time, preventing the fall of the other cups. A preferred embodiment of the release elements 30 and of the corresponding release movement will be better described below.

The device for dispensing cups 10 further comprises an actuator 40 which is functionally connected to the release elements 30, by way of kinematic transmission means 51, 52, 53, 54 (such as for example gearwheels, sprockets, pinions, ring gears, shafts etc.) in order to actuate at least the aforementioned release movement thereof.

As is evident, the actuator 40 is preferably connected or can be connected to control electronics which can be can be connected to, or integrated in, a machine for the distribution of beverages, so that, following a command imparted by a user, the actuator 40 is activated in order to induce the release movement and therefore cause the dispensing of a cup through the dispensing outlet 21.

In the example shown, purely for the purposes of example, some connection means are shown, generally designated with the reference numeral 17, for connection to data and/or electricity, such as conventional wires and connectors, the function of which is to connect the device for dispensing cups 10 to the electronics of a machine for the distribution of beverages.

According to the invention, the device for dispensing cups 10 comprises an adjustment element 60 which is functionally connected to the release elements 30 in order to modify their position so as to adjust (i.e. modify in a controlled manner) the diameter d of the passage opening 22.

In practice, according to the invention, by acting on the adjustment element 60 it is possible to displace the release elements 30, moving them away from or closer to each other, for example by mechanically transmitting to them a motion as will be described in detail below, and in this manner widening or narrowing the passage opening 22.

In other words, the adjustment element 60 is an element that, when actuated by an operator, causes a controlled movement of the release elements 30 and preferably a movement of all the release elements 30 along the same horizontal plane so as to position them along a circumference that is smaller or larger than the starting circumference.

Preferably, the adjustment element 60 is a rotatable mechanical element (such as for example a screw or a screw-in crown) which is connected mechanically to the release elements 30 so that the rotation of such adjustment element 60 induces a displacement of all the release elements 30, and more precisely a movement that is radially equivalent (i.e. characterized by an equal variation of the distance from the center of the passage opening 22) and preferably along a same horizontal plane for all the release elements 30, thus producing a consequent variation of the diameter d of the passage opening 22.

Even more preferably, the adjustment element 60 is a micrometric adjustment screw.

In this manner it is possible to configure the dispensing device 10 to dispense cups of different diameter, without having to carry out invasive interventions, simply by acting on the adjustment element 60.

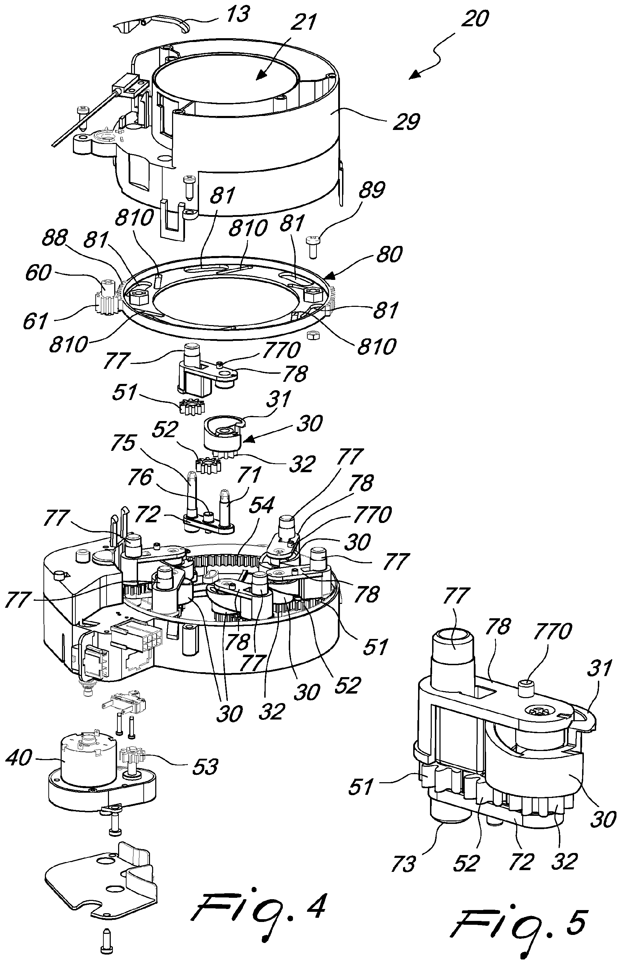

Returning in more detail to the release elements 30 present in the preferred and illustrated embodiment, with particular reference to Figures 4 and 5, these are substantially cylindrical with an asymmetric profile, a vertical longitudinal axis, and an upper rim 31 inclined in the manner of a spiral (i.e. like a line wound around an ideal cone which is adapted to interact mechanically with the cups to be dispensed.

In this embodiment the release movement is a rotation of the release elements 30 about their longitudinal vertical axis.

In practice, in the stationary condition, the upper edges 31 of the release elements 30 constitute an abutment barrier on which the closest cup rests; the release movement consists of a simultaneous rotation of all the release elements 30, through 360°, during which the abutment barrier becomes absent at the edge of the cup, for the time just sufficient to allow the fall of the closest cup; as the rotation continues the release elements 30 return to the initial position and the abutment barrier is reconstituted, obstructing the next cup.

Also in the preferred and illustrated embodiment, each one of the release elements 30 is provided with a toothed end 32 and is pivoted on an insert 71 which is supported by a supporting arm 72 which can rotate about a fulcrum 73.

In this embodiment, the kinematic transmission means 51, 52, 53, 54 which enable the transmission of motion from the actuator 40 to the release elements 30 comprise:
- a plurality of mutually meshing gears 51, 52, at least one of which 52 meshes with the toothed end 32 of the release element 30; such gears 51, 52 are advantageously pivoted on respective posts 75, 76 which are also supported by the same supporting arm 72 that supports the respective release element 30, and
- a toothed ring 54, which is positioned coaxially to the dispensing outlet 21 and which can rotate about the vertical axis Y of the latter, is functionally connected to the actuator 40 (for example by being connected mechanically thereto by way of a pinion 53) in order to transmit the release movement simultaneously to all the release elements 30 by way of the aforementioned gears 51, 52.

In more detail, the toothed ring 54 meshes with at least one of the gears 51 for each release element 30 and, ultimately, by rotating induces the simultaneous rotation of all the release elements 30.

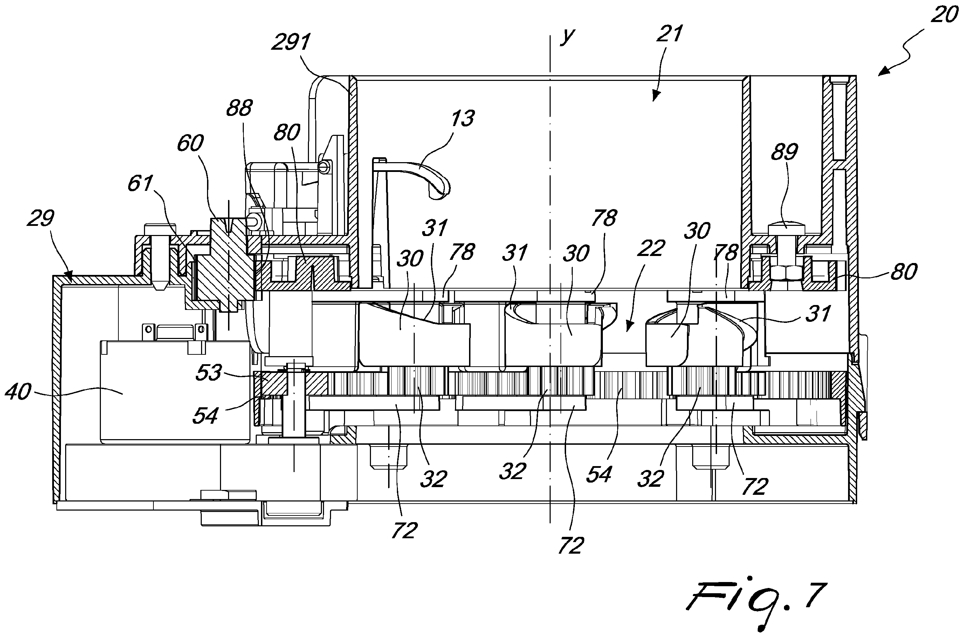

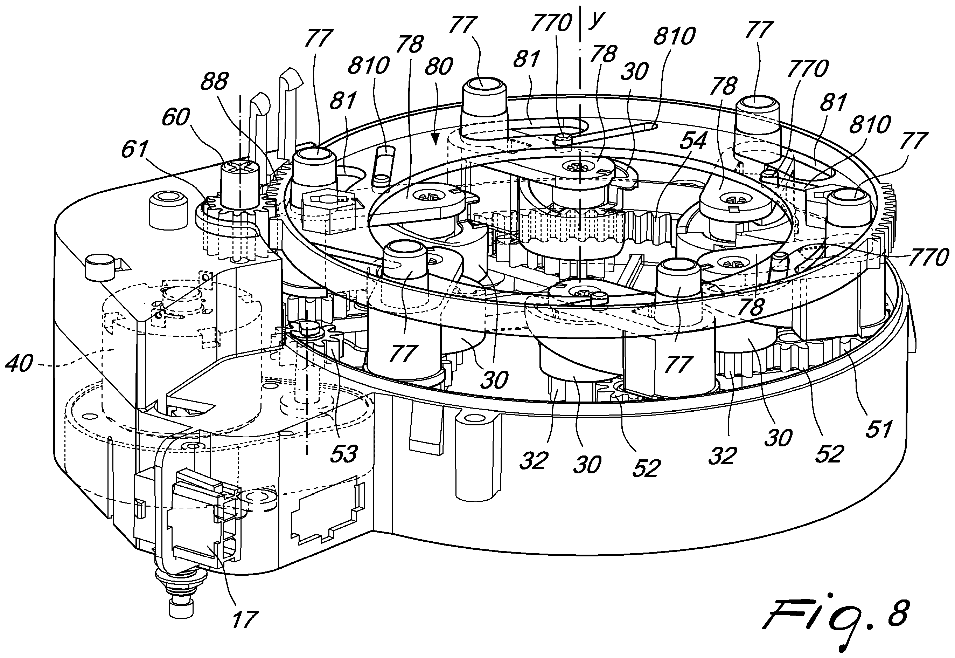

As mentioned, according to the invention, the adjustment element 60 is functionally connected to the release elements 30 in order to modify their position; below a possible embodiment of such functional connection is described, with particular reference to Figures 4 to 8.

In the preferred embodiment, the release device 20 comprises an adjustment ring 80 which is coaxial to the dispensing outlet 21 and is provided with a plurality of slots 81, 810.

Conveniently, such slots 81, 810 are at least equal in number to the number of release elements 30 and preferably there are two for each release element 30.

Each one of the slots 81, 810 is engaged by a pin 77, 770 which is connected mechanically, by way of a connecting arm 78, to one of the release elements 30, so that a rotation of the adjustment ring 80 about the vertical axis Y of the dispensing outlet 21 causes a displacement of all the release elements 30, and more precisely a movement that is radially equivalent and preferably along a same horizontal plane for all the release elements 30, thus causing the consequent variation of the diameter d of the passage opening 22.

Preferably, the slots 81, 810 comprise, for each release element 30, a first slot 81 engaged by a respective first pin 77 and a second slot 810, which is inclined with respect to the first slot 81 and adjacent thereto, engaged by a respective second pin 770.

In more detail, as can be seen in Figure 6, the first slots 81 are arranged circumferentially on the adjustment ring 80, along the same circumference, equidistant from the vertical axis Y of the dispensing outlet 21, and they substantially have the shape of an arc of circumference.

The second slots 810 are substantially straight and are arranged inclined, each one close to an end of one of the first slots 81.

As can be seen from the figures, the first 77 and the second 770 pin, which occupy respectively a first slot 81 and the second slot 810 adjacent thereto, are connected mechanically, by way of the same connecting arm 78, to the same release element 30.

In other words, each release element 30 is connected mechanically, by way of a connecting arm 78, to two pins (a first pin 77 and a second pin 770) which respectively engage a first 81 and a second 810 slot which are arranged on the adjustment ring 80 at such release element 30. Both the first slots 81 and the second slots 810 are therefore at least equal in number to the release elements 30.

In this manner, the adjustment ring 80 guides the movement of each release element 30 by acting on the two pins 77, 770, by modifying their position along a suitable trajectory.

Conveniently, the adjustment element 60 is mechanically connected to the adjustment ring 80 in order to actuate the rotation thereof.

In more detail, in the embodiments where the adjustment element 60 is a rotatable mechanical element, as in the example shown, the adjustment element 60 is connected mechanically to the adjustment ring 80, in order to actuate the rotation thereof, preferably by way of a toothed portion 61 which meshes with a plurality of teeth 88 which are positioned on an external edge of the adjustment ring 80.

In a possible embodiment, the toothed portion is constituted by an end of the adjustment element 60 that is provided with teeth, in other embodiments it is constituted by a gearwheel or a toothed spool to which the adjustment element 60 is rigidly coupled.

In practice, in the preferred and illustrated embodiment, by rotating the adjustment element 60 a rotation is transmitted, by way of the toothed portion 61, to the adjustment ring 80, which entrains the pins 77, 770 which in turn entrain, by way of the connecting arm 78, the release elements 30.

Note that in the example shown, the release elements 30 are coupled both to the connecting arm 78 and to the supporting arm 72 and, as a consequence, they are coupled in motion along a suitable co-planar trajectory.

Preferably, the device for dispensing cups 10 comprises at least one locking means 89, such as for example a clamping screw, which can be connected mechanically to the adjustment ring 80 in order to keep it stationary in position during operation. Such locking means 89 is conveniently configured to be loosened by a technician in order to allow, when necessary, the rotation of the adjustment ring 80, for example by unscrewing it using a screwdriver.

In other embodiments, not shown, the functional connection between the adjustment element 60 and the release elements 30 is provided by way of other, conventional kinematic transmission systems, for example by way of a kinematic chain that comprises one or more gears that link the adjustment element 60 and the adjustment ring 80 in rotation.

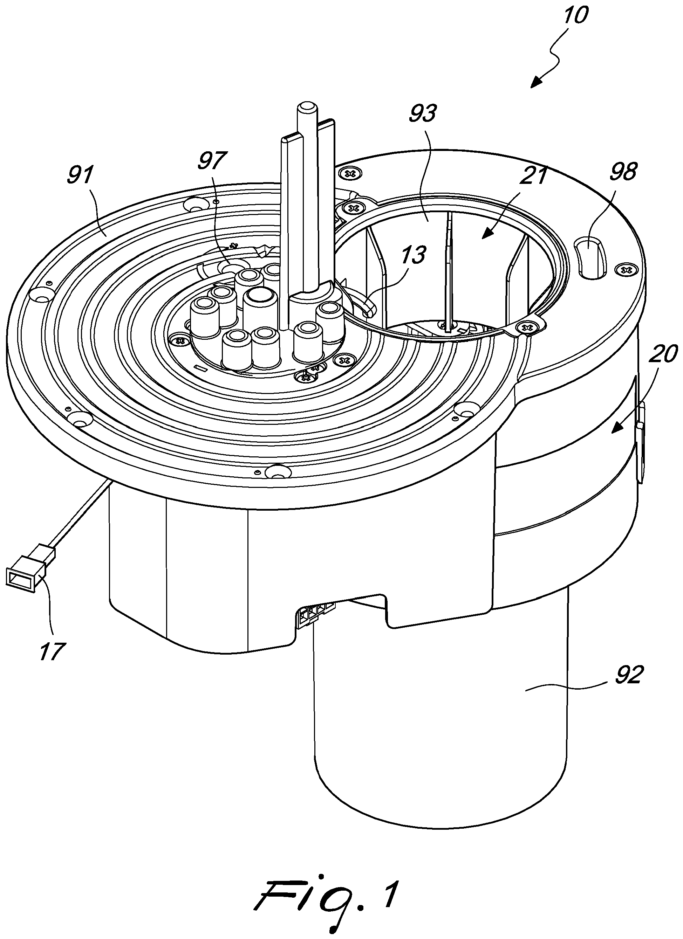

Returning to the example illustrated, as shown in particular in Figure 1, the device for dispensing cups 10 also comprises an upper resting surface 91 which is adapted to support the cups to be dispensed.

Note that, in the example shown, the adjustment element 60 is accessible from the outside, for the adjustment of the diameter of the passage opening 22, by way of an adjustment hole 97 provided on the resting surface 91, so that the adjustment element 60 can be actuated from the outside, for example by inserting a screwdriver in order to turn the adjustment element 60.

In this manner the adjustment can be carried out easily, without the need of removing any element, for example simply by turning the screw that constitutes the adjustment element 60 with a screwdriver.

The locking means 89 is also accessible from the outside, through an access slot 98.

Optionally, the device for dispensing cups 10 also comprises a container for the cups to be dispensed (not shown), which is accommodated above the resting surface 91 and which comprises a plurality of sectors, each one of which is adapted to contain a stack of cups.

Such container is furthermore rotatable about a vertical rotation axis which is parallel to the vertical axis Y of the dispensing outlet 21, so that each one of the sectors can be positioned selectively at the dispensing outlet 21, so as to supply it with the stack of cups contained therein.

Preferably, the device for dispensing cups 10 further comprises a substantially tubular adapter element 93 which is accommodated in the dispensing outlet 21, and more precisely at the inlet thereof, above the passage opening 22 and coaxially thereto, in order to convey the cups to be dispensed toward the passage opening 22.

Advantageously, the adapter element 93 is fixed to the release device 20 by way of removable affixing means 99 (for example screws) so as to be interchangeable with other adapter elements 93' of different size.

According to an optional and advantageous characteristic, the device for dispensing cups 10 also comprises a conveyor tube 92 for directing the fall of the dispensed cups, which is positioned below the dispensing outlet 21 and coaxially thereto.

Such conveyor tube 92 is fixed to the release device 20 by way of removable affixing means 99 (for example screws) so as to be interchangeable with other conveyor tubes of different sizes 92', 92".

In practice, in the preferred embodiment, the conveyor tube 92 and the adapter element 93 can be changed according to the type of cups to be dispensed.

Preferably, the device for dispensing cups 10 also comprises a plurality of means for detecting, sensors or the like, which are configured to detect the correct rotation of the release elements and/or the presence of cups in the device.

The figures show, for example, a means for detecting cups 13 which comprises a retractable lever, connected to a switch, so that the presence of cups at the inlet of the dispensing outlet 21 makes the lever retract and thus is detected by the switch.

Such detecting means are connected to an electronic control system (not shown) which in turn is provided with, or can be connected to, an interface device that render the detected data intelligible to the user (for example by way of LEDs or a screen).

Optionally, the device for dispensing cups 10 can comprise one or more measurement means which are configured to measure the diameter d of the passage opening 22 and/or the variation thereof, for example by being connected to the adjustment ring 80 in order to measure the effective rotation thereof.

Operation of the device for dispensing cups is clear and evident from the foregoing description.

It is worth nothing at this point that the variation of the diameter d of the passage opening 22 can be very great, and certainly it is possible to obtain a variation greater than the few millimeters that can be obtained in the background art.

Furthermore, in particular by virtue of the use of a micrometric screw which is mechanically connected to the release elements 30, adjustment of the diameter d of the passage opening is very easy and at the same time very precise.

In practice it has been found that the device for dispensing cups and the like, according to the present invention, achieves the intended aim and objects in that it makes it possible to dispense different cups that have different diameters.

Another advantage of the device for dispensing cups, according to the invention, is that it can be reconfigured to dispense cups with a different diameter more precisely than in the known art.

Another advantage of the device for dispensing cups, according to the invention, is that it can be reconfigured to dispense cups with a different diameter more rapidly, simply and economically than in the known art.

Another advantage of the device for dispensing cups, according to the invention, is that it can be reconfigured to dispense a wider variety of cups than in the known art.

Another advantage of the device for dispensing cups, according to the invention, is that it is more reliable and less subject to jams when compared to the known art.

Another advantage of the device for dispensing cups, according to the invention, consists in that it is easy to implement and economically competitive when compared to the known art.

The device for dispensing cups, thus conceived, is susceptible of numerous modifications and variations, all of which are within the scope of the appended claims.

Moreover, all the details may be substituted by other, technically equivalent elements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for dispensing cups and the like (10), which comprises:
- a release device (20), on top of which it is possible to arrange one or more cups to be dispensed, and which is provided with a dispensing outlet (21) with a vertical axis (Y), inside which a plurality of release elements (30) are arranged which between them define a substantially circular passage opening (22) which has a diameter (d) that is dimensioned as a function of the cups to be dispensed, said release elements (30) being configured to cause the fall of a single cup to be dispensed through said passage opening (22) following a release movement thereof;
- an actuator (40) which is functionally connected to said release elements (30), by way of kinematic transmission means (51, 52, 53, 54), in order to actuate at least said release movement thereof;
an adjustment element (60) which is functionally connected to said release elements (30) in order to modify their position so as to adjust the diameter (d) of said passage opening (22), said release device (20) comprising an adjustment ring (80) which is coaxial to said dispensing outlet (21) and is provided with a plurality of slots (81, 810), at least equal in number to the release elements (30), each one engaged by a pin (77, 770) which is connected mechanically, by way of a connecting arm (78), to one of said release elements (30), so that a rotation of said adjustment ring (80) about said vertical axis (Y) of the dispensing outlet (21) induces a radially equivalent displacement of all the release elements (30) and the consequent variation of the diameter (d) of said passage opening (22); said adjustment element (60) being mechanically connected to said adjustment ring (80) in order to actuate the rotation thereof, **characterized in that** each one of said release elements (30) is provided with a toothed end (32) and is pivoted on an insert (71) which is supported by a supporting arm (72) which can rotate about a fulcrum (73);
said kinematic transmission means (51, 52, 53) comprising:
- a plurality of mutually meshing gears (51, 52), at least one of which (52) meshes with said toothed end (32) of the release element (30), said gears being pivoted on respective posts (75, 76) which are also supported by said supporting arm (72), and
- a toothed ring (54), which can rotate about said vertical axis (Y) of the dispensing outlet (21), and which is functionally connected to said actuator (40) by being connected thereto by way of a pinion (53) in order to transmit said release movement simultaneously to all the release elements (30) by way of said gears (51, 52);
said toothed ring (54) meshing with at least one of said gears (51) for each release element (30), the device further comprising a container for the cups to be dispensed, which is accommodated above an upper resting surface (91) which is adapted to support the cups to be dispensed and which comprises a plurality of sectors, each one of which is adapted to contain a stack of cups; said container being rotatable about a vertical rotation axis which is parallel to said vertical axis (Y) of the dispensing outlet, so that each one of said sectors can be arranged selectively at said dispensing outlet (21) so as to supply said dispensing outlet(21) with the stack of cups contained therein, the device further comprising a conveyor tube (92) for directing the fall of the dispensed cups, which is arranged below said dispensing outlet (21) coaxially thereto, and/or a substantially tubular adapter element (93), which is accommodated in said dispensing outlet (21) above said passage opening (22) and coaxially thereto, in order to convey the cups to be dispensed towards said passage opening (22); said conveyor tube (92) and/or said adapter element (93) being affixed to said release device (2)) by way of removable affixing means (99) so as to be interchangeable; said adjustment element (60) being accessible from the outside, in order to adjust the diameter of said passage opening (22), through an adjustment hole (97) which is provided in said resting surface (91).

2. The device according to claim 1, **characterized in that** said slots (81, 810) comprise, for each release element (30), a first slot (81) engaged by a respective first pin (77) and a second slot (810), which is inclined with respect to said first slot (81) and engaged by a respective second pin (770); said first pin (77) and said second pin (770) being connected mechanically, by way of the same connecting arm (78), to the same release element (30).

3. The device (10) according to one or more of the preceding claims, **characterized in that** said adjustment element (60) is a rotatable mechanical element which is connected mechanically to said release elements (30) so that the rotation of said adjustment element (60) induces a radially equivalent displacement of all the release elements (30) and the consequent variation of the diameter (d) of said passage opening (22).

4. The device according to claim 1, **characterized in that** said adjustment element (60) is connected mechanically to said adjustment ring (80), in order to actuate the rotation thereof, by way of a toothed portion (61) which meshes with a plurality of teeth (88) which are arranged on an external edge of said adjustment ring (80).

5. The device (10) according to one or more of the preceding claims, **characterized in that** said adjustment element (60) is a micrometric adjustment screw.

6. The device according to claim 1, **characterized in that** said release elements (30) have a substantially cylindrical shape with an asymmetric profile, a vertical longitudinal axis, and an upper edge (31) which is inclined in the manner of a spiral and is adapted to interact mechanically with the cups to be dispensed; said release movement being a rotation of the release elements (30) about their vertical longitudinal axis.

## Patentansprüche

1. Eine Vorrichtung zur Ausgabe von Bechern und dergleichen (10), die Folgendes umfasst:
- eine Abgabevorrichtung (20), auf welcher ein oder mehrere abzugebende Becher angeordnet werden können und welche mit einem Abgabeauslass (21) mit vertikaler Achse (Y) versehen ist, innerhalb dessen eine Vielzahl von Abgabeelementen (30) angeordnet ist, die zwischen sich eine im Wesentlichen kreisförmige Durchgangsöffnung (22) bestimmen, welche einen Durchmesser (d) hat, der in Abhängigkeit von den abzugebenden Bechern dimensioniert ist; wobei die Abgabeelemente (30) ausgebildet sind, um das Fallen eines einzelnen abzugebenden Bechers durch die Durchgangsöffnung (22) nach einer Abgabebewegung davon zu veranlassen;
- ein Antriebselement (40), welches über kinematische Übertragungsmittel (51, 52, 53, 54) funktionell mit den Abgabeelementen (30) verbunden ist, um mindestens die Abgabebewegung derselben anzutreiben;
ein Einstellelement (60), das funktionell mit den Abgabeelementen (30) verbunden ist, um ihre Position zu verändern und so den Durchmesser (d) der Durchgangsöffnung (22) anzupassen, wobei die Abgabevorrichtung (20) einen Justierring (80) umfasst, der koaxial mit dem Abgabeauslass (21) und mit einer Vielzahl von Schlitzen (81, 810) versehen ist, deren Anzahl mindestens gleich der der Abgabeelemente (30) ist, wobei in jeden ein Stift (77, 770) eingreift, welcher über einen Verbindungsarm (78) mechanisch mit einem der Abgabeelemente (30) verbunden ist, so dass eine Drehung des Justierrings (80) um die vertikale Achse (Y) des Abgabeauslasses (21) eine radial äquivalente Verschiebung aller Abgabeelemente (30) und die daraus folgende Veränderung des Durchmessers (d) der Durchgangsöffnung (22) auslöst; wobei das Einstellelement (60) mechanisch mit dem Justierring (80) verbunden ist, um die Drehung desselben anzutreiben; **dadurch gekennzeichnet, dass** jedes der Abgabeelemente (30) mit einem gezahnten Ende (32) versehen und drehgelenkig auf einen Einsatz (71) aufgesetzt ist, welcher von einem Tragarm (72) getragen ist, der sich um einen Hebeldrehpunkt (73) drehen kann;
wobei die kinematischen Übertragungsmittel (51, 52, 53) Folgendes umfassen:
- eine Vielzahl ineinander eingreifender Zahnräder (51, 52), von denen mindestens eines (52) in das gezahnte Ende (32) des Abgabeelements (30) eingreift, wobei die Zahnräder drehgelenkig auf entsprechenden Stiften (75, 76) gelagert sind, die auch von dem Tragarm (72) getragen sind, und
- einen Zahnkranz (54), der sich um die vertikale Achse (Y) des Abgabeauslasses (21) drehen kann und funktionell über ein Ritzel (53) mit dem Antriebselement (40) verbunden ist, um die Abgabebewegung über die Zahnräder (51, 52) gleichzeitig auf alle Abgabeelemente (30) zu übertragen;
wobei der Zahnkranz (54) in mindestens eines der Zahnräder (51) für jedes Abgabeelement (30) eingreift; wobei die Vorrichtung weiter einen Behälter für die abzugebenden Becher umfasst, der oberhalb einer oberen Auflagefläche (91) untergebracht ist, die ausgebildet ist, um die abzugebenden Becher zu tragen, und die eine Vielzahl von Sektoren umfasst, welche jeweils ausgebildet sind, um einen Stapel von Bechern aufzunehmen; wobei der Behälter um eine vertikale Drehachse drehbar ist, die parallel zu der vertikalen Achse (Y) des Abgabeauslasses ist, so dass jeder der Sektoren wahlweise an dem Abgabeauslass (21) angeordnet werden kann, um den Abgabeauslass (21) mit dem Stapel darin enthaltener Becher zu versorgen; wobei die Vorrichtung weiter ein Förderrohr (92) umfasst, um das Fallen der abgegebenen Becher zu lenken, welches unterhalb des Abgabeauslasses (21) koaxial damit angeordnet ist, und/oder ein im Wesentlichen rohrförmiges Adapterelement (93), welches in dem Abgabeauslass (21) oberhalb der Durchgangsöffnung (22) aufgenommen und koaxial damit ist, um die abzugebenden Becher zu der Durchgangsöffnung (22) hin zu befördern; wobei das Förderrohr (92) und/oder das Adapterelement (93) über lösbare Befestigungsmittel (99) austauschbar an der Abgabevorrichtung (2) befestigt sind; wobei das Einstellelement (60) von außen über ein Einstellloch (97), das in der Auflagefläche (91) angebracht ist, zugänglich ist, um den Durchmesser der Durchgangsöffnung (22) anzupassen.

2. Die Vorrichtung gemäß Anspruch 1, **dadurch gekennzeichnet, dass** die Schlitze (81, 810) für jedes Abgabeelement (30) einen ersten Schlitz (81) umfassen, in welchen ein entsprechender erster Stift (77) eingreift, und einen zweiten Schlitz (810), welcher schräg mit Bezug auf den ersten Schlitz (81) ist und in welchen ein entsprechender zweiter Stift (770) eingreift; wobei der erste Stift (77) und der zweite Stift (770) über denselben Verbindungsarm (78) mechanisch mit demselben Abgabeelement (30) verbunden sind.

3. Die Vorrichtung (10) gemäß einem oder mehreren der obigen Ansprüche, **dadurch gekennzeichnet, dass** das Einstellelement (60) ein drehbares mechanisches Element ist, das mechanisch mit den Abgabeelementen (30) verbunden ist, so dass die Drehung des Einstellelements (60) eine radial äquivalente Verschiebung aller Abgabeelemente (30) und die daraus folgende Veränderung des Durchmessers (d) der Durchgangsöffnung (22) auslöst.

4. Die Vorrichtung gemäß Anspruch 1, **dadurch gekennzeichnet, dass** das Einstellelement (60) mechanisch mit dem Justierring (80) verbunden ist, um die Drehung desselben anzutreiben, über einen gezahnten Abschnitt (61), der in eine Vielzahl von Zähnen (88) eingreift, welche auf einer äußeren Kante des Justierrings (80) angeordnet sind.

5. Die Vorrichtung (10) gemäß einem oder mehreren der obigen Ansprüche, **dadurch gekennzeichnet, dass** das Einstellelement (60) eine mikrometrische Stellschraube ist.

6. Die Vorrichtung gemäß Anspruch 1, **dadurch gekennzeichnet, dass** die Abgabeelemente (30) eine im Wesentlichen zylindrische Form mit einem asymmetrischen Profil, einer vertikalen Längsachse und einem oberen Rand (31) haben, der spiralförmig schräg und ausgebildet ist, um mechanisch mit den abzugebenden Bechern zusammenzuwirken; wobei die Abgabebewegung eine Drehung der Abgabeelemente (30) um ihre vertikale Längsachse ist.

## Revendications

1. Dispositif pour distribuer des gobelets et similaires (10) qui comprend :
un dispositif de libération (20), sur le dessus duquel il est possible d'agencer un ou plusieurs gobelets à distribuer et qui est prévu avec une sortie de distribution (21) avec un axe vertical (Y), à l'intérieur de laquelle est agencée une pluralité d'éléments de libération (30) qui définissent entre eux, une ouverture de passage (22) sensiblement circulaire qui a un diamètre (d) qui est dimensionné en fonction des gobelets à distribuer, lesdits éléments de libération (30) étant configurés pour provoquer la chute d'un seul gobelet à distribuer par ladite ouverture de passage (22) suite à son mouvement de libération ;
un actionneur (40) qui est fonctionnellement raccordé auxdits éléments de libération (30), par le biais de moyens de transmission cinématique (51, 52, 53, 54) afin d'actionner au moins ledit mouvement de libération de ces derniers ;
un élément de réglage (60) qui est fonctionnellement raccordé auxdits éléments de libération (30) afin de modifier leur position pour régler le diamètre (d) de ladite ouverture de passage (22), ledit dispositif de libération (20) comprenant une bague de réglage (80) qui est coaxiale par rapport à ladite sortie de distribution (21) et est prévue avec une pluralité de fentes (81, 810), au moins égales en nombre aux éléments de libération (30), chacun mis en prise par une broche (77, 770) qui est raccordée mécaniquement, au moyen d'un bras de raccordement (78), à l'un desdits éléments de libération (30), de sorte qu'une rotation de ladite bague de réglage (80) autour dudit axe vertical (Y) de la sortie de distribution (21) induit un déplacement radialement équivalent de tous les éléments de libération (30) et la variation consécutive du diamètre (d) de ladite ouverture de passage (22) ; ledit élément de réglage (60) étant mécaniquement raccordé à ladite bague de réglage (80) afin d'actionner sa rotation, **caractérisé en ce que** chacun desdits éléments de libération (30) est prévu avec une extrémité dentée (32) et est pivoté sur un insert (71) qui est supporté par un bras de support (72) qui peut tourner autour d'un pivot (73) ;
lesdits moyens de transmission cinématique (51, 52, 53) comprenant :
une pluralité de roues dentées s'engrenant mutuellement (51, 52), dont au moins l'une (52) s'engrène avec ladite extrémité dentée (32) de l'élément de libération (30), lesdites roues dentées étant pivotées sur des montants (75, 76) respectifs qui sont également supportés par ledit bras de support (72), et
une bague dentée (54) qui peut tourner autour dudit axe vertical (Y) de la sortie de distribution (21) et qui est fonctionnellement raccordée audit actionneur (40) en étant raccordée à ce dernier au moyen d'un pignon (53) afin de transmettre ledit mouvement de libération simultanément à tous les éléments de libération (30) au moyen desdites roues dentées (51, 52) ;
ladite bague dentée (54) s'engrenant avec au moins l'une desdites roues dentées (51) pour chaque élément de libération (30), le dispositif comprenant en outre un récipient pour les gobelets à distribuer, qui est logé au-dessus d'une surface de repos supérieure (91) qui est adaptée pour supporter les gobelets à distribuer et qui comprend une pluralité de secteurs, dont chacun est adapté pour contenir une pile de gobelets ; ledit récipient pouvant tourner autour d'un axe de rotation vertical qui est parallèle audit axe vertical (Y) de la sortie de distribution, de sorte que chacun desdits secteurs peut être agencé sélectivement au niveau de ladite sortie de distribution (21) afin d'alimenter ladite sortie de distribution (21) avec la pile de gobelets contenue à l'intérieur de cette dernière, le dispositif comprenant en outre un tube transporteur (92) pour diriger la chute des gobelets distribués, qui est agencé au-dessous de ladite sortie de distribution (21) de manière coaxiale par rapport à ce dernier et/ou un élément d'adaptateur (93) sensiblement tubulaire qui est logé dans ladite sortie de distribution (21) au-dessus de ladite ouverture de passage (22) et de manière coaxiale par rapport à cette dernière, afin de transporter les gobelets à distribuer vers ladite ouverture de passage (22) ; ledit tube transporteur (92) et/ou ledit élément d'adaptateur (93) étant fixé(s) audit dispositif de libération (2) par le biais de moyens de fixation amovibles (99) afin d'être interchangeable(s) ; ledit élément de réglage (60) étant accessible depuis l'extérieur, afin de régler le diamètre de ladite ouverture de passage (22), par le biais d'un trou de réglage (97) qui est prévu dans ladite surface de repos (91).

2. Dispositif selon la revendication 1, **caractérisé en ce que** lesdites fentes (81, 810) comprennent, pour chaque élément de libération (30), une première fente (81) mise en prise par une première broche (77) respective et une seconde fente (810) qui est inclinée par rapport à ladite première fente (81) et mise en prise par une seconde broche (770) respective ; ladite première broche (77) et ladite seconde broche (770) étant raccordées mécaniquement au moyen du même bras de raccordement (78), au même élément de libération (30).

3. Dispositif (10) selon une ou plusieurs des revendications précédentes, **caractérisé en ce que** ledit élément de réglage (60) est un élément mécanique rotatif qui est raccordé mécaniquement auxdits éléments de libération (30) de sorte que la rotation dudit élément de réglage (60) induit un déplacement radialement équivalent de tous les éléments de libération (30) et la variation successive du diamètre (d) de ladite ouverture de passage (22).

4. Dispositif selon la revendication 1, **caractérisé en ce que** ledit élément de réglage (60) est raccordé mécaniquement à ladite bague de réglage (80) afin d'actionner sa rotation, au moyen d'une partie dentée (61) qui s'engrène avec une pluralité de dents (88) qui sont agencées sur un bord externe de ladite bague d'ajustement (80).

5. Dispositif (10) selon une ou plusieurs des revendications précédentes, **caractérisé en ce que** ledit élément de réglage (60) est une vis de réglage micrométrique.

6. Dispositif selon la revendication 1, **caractérisé en ce que** lesdits éléments de libération (30) ont une forme sensiblement cylindrique avec un profil asymétrique, un axe longitudinal vertical, et un bord supérieur (31) qui est incliné à la manière d'une spirale et est adapté pour interagir mécaniquement avec les gobelets à distribuer ; ledit mouvement de libération étant une rotation des éléments de libération (30) autour de leur axe longitudinal vertical.
